# EUROPEAN PATENT SPECIFICATION

(11) **EP 3 645 475 B1**
(45) Date of publication and mention of the grant of the patent: **18.10.2023**
(21) Application number: 18733293.7
(22) Date of filing: 29.06.2018
(51) Int. Cl.: C03C 17/00

(54) **FUNCTIONALIZED SUBSTRATE**
FUNKTIONALISIERTES SUBSTRAT
SUBSTRAT FONCTIONNALISÉ

(30) Priority: 29.06.2017 EP 17001108
(43) Date of publication of application: 06.05.2020
(73) Proprietor: SAINT-GOBAIN GLASS FRANCE, 92400 Courbevoie (FR)
(72) Inventor: GUIMARD, Denis, 75013 Paris (FR); DELBECQ, Cécile, 75014 Paris (FR)
(74) Representative: Saint-Gobain Recherche
(86) International application number: PCT/EP2018/067514
(87) International publication number: WO 2019/002525

(56) References cited:
- EP-A1- 2 143 762
- EP-A1- 2 360 220
- WO-A1-2012/161293
- WO-A1-2017/117342
- JUNGHEUM YUN ET AL: "Fabrication of a Completely Transparent and Highly Flexible ITO Nanoparticle Electrode at Room Temperature", ACS APPLIED MATERIALS & INTERFACES, vol. 5, no. 1, 9 January 2013 (2013-01-09) , pages 164-172, XP055397941, US ISSN: 1944-8244, DOI: 10.1021/am302341p

## Description

### FIELD OF THE DISCLOSURE

Embodiments of the present invention relate to a functionalized substrate comprising a near infrared absorbing coating and use thereof for solar control applications.

### DESCRIPTION OF THE RELATED ART

Solar control coatings are widely used in the automotive and building industries for improving insulation of glazings as well as offering new possibilities of aesthetic modifications. Solar control function is based on near infrared (NIR) absorption or reflection.

WO2017/117342 A1 describes a functionalized substrate comprising a substrate and a near infrared absorbing coating. The publication "Fabrication of a Completely Transparent and Highly Flexible ITO Nanoparticle Electrode at Room Temperature", ACS Applied Materials & Interfaces, vol. 5, no. 1, pages 164-172, describes ITO nanoarrays provided on PET substrates.

NIR reflective coatings are generally made of stacks comprising metal layers, such as silver, as described for example in US 2006/0057399. However, those stacks may affect visible light transmission. In addition, metal layers, such as silver layers, may exhibit high conductivity that can block electromagnetic waves, which would be a drawback for mobile phone communications. Also, silver layers in particular have low stability and poor moisture and weather resistance, which may affect their optical properties and their efficiency as NIR reflecting layers.

NIR absorbing coatings can be provided using various functional layers. For example, US 6707610 and WO 2008/036358 disclose window films comprising a TiN layer obtained by magnetron sputtering. However, those window films have rather low visible light transmission and are not selective. WO 2008/036363 suggests combining a TiN layer with a silver-based reflecting coating for improving the selectivity. However, such a combination still has the negative effect of silver layers.

Nanoparticles of various inorganic oxides, such as indium tin oxide (ITO) and antimony tin oxide (ATO), can absorb NIR radiations. For example, US 2010/0062242 discloses a window film comprising an IR reflecting layer comprising a metal layer, and an IR absorbing layer comprising IR absorbing nanoparticles dispersed in a cured polymeric binder. Such windows films present rather high visible light transmission and selectivity. NIR absorbing nanoparticles-containing coatings are generally obtained by wet-coating methods, as disclosed in US 2010/0062242. Wet-coating methods consist typically of depositing a thin layer of a solution comprising the nanoparticles and an organic binder on a substrate, and drying and/or curing the layer. For producing stacks of multilayers, the use of a two step wet-coating method may not be desired, in particular for stacks including layers deposited by magnetron sputtering. Industries continue to demand improved NIR absorbing nanoparticles-containing coatings that could be obtained by methods more compatible with the magnetron sputtering process.

### BRIEF DESCRIPTION OF THE DRAWINGS

Embodiments are illustrated by way of example and are not limited in the accompanying figures.
FIG. 1 includes a side elevation view of a functionalized substrate in accordance with an embodiment.
FIG. 2 includes a side elevation view of a functionalized substrate in accordance with another embodiment.
FIG. 3 includes a side elevation view of a functionalized substrate in accordance with a further embodiment.
FIG. 4 includes a side elevation view of a functionalized substrate in accordance with yet another embodiment.
FIG. 5 includes a side elevation view of a functionalized substrate in accordance with yet a further embodiment.
FIG. 6 includes a side elevation view of a near infrared absorbing nanoparticle layer disposed on a substrate in accordance with an embodiment.
FIG. 7 includes a side elevation view of a near infrared absorbing nanoparticle layer disposed on a substrate in accordance with another embodiment.
FIG. 8 shows the absorption spectrum of the coated substrate of Example 1.

Skilled artisans appreciate that elements in the figures are illustrated for simplicity and clarity and have not necessarily been drawn to scale. For example, the dimensions of some of the elements in the figures may be exaggerated relative to other elements to help to improve understanding of embodiments of the invention.

### DETAILED DESCRIPTION OF THE PREFERRED EMBODIMENTS

The following description in combination with the figures is provided to assist in understanding the teachings disclosed herein. The following discussion will focus on specific implementations and embodiments of the teachings. This focus is provided to assist in describing the teachings and should not be interpreted as a limitation on the scope or applicability of the teachings.

The use of "a" or "an" is employed to describe elements and components described herein. This is done merely for convenience and to give a general sense of the scope of the invention. This description should be read to include one or at least one and the singular also includes the plural, or vice versa, unless it is clear that it is meant otherwise.

In a first aspect, the present invention relates to a functionalized substrate according to claim 1. The functionalized substrate comprises a substrate and a near infrared (NIR) absorbing coating having a ratio between the light transmittance and the energy transmittance of at least 1.05, on said substrate. In a particular embodiment, said NIR absorbing coating is made of an inorganic matrix containing NIR absorbing nanoparticles comprising indium, tin, zinc, antimony, aluminum, tungsten or mixtures thereof.

In the context of the present application, NIR radiation refers to radiation from 780 to 2500 nm. By the expression "NIR absorbing" when referring to a coating or nanoparticles, it is meant that said coating or nanoparticles may absorb at least 10%, at least 15% or even at least 20% of the NIR radiation and may absorb up to 60%, up to 55% or up to 50% of the NIR radiation.

The NIR coating has preferably a ratio between the light transmittance (TL) and the energy transmittance (TE, also called solar direct transmittance), i.e. TL/TE, of at least 1.07, more preferably at least 1.09. The light transmittance and the energy transmittance are as defined in the standard EN 410:1998. The light transmittance, respectively the energy transmittance, of the coating corresponds to the difference between the light transmittance, respectively the energy transmittance, of the coated substrate and the light transmittance, respectively the energy transmittance, of the uncoated substrate.

In one particular embodiment, the NIR coating has a light absorption of less than 10%, preferably less than 7%, more preferably less than 5%, even more preferably less than 3%. The light absorption (AL) is equal to the value 100% minus the light transmittance (TL) and the light reflectance (RL), i.e. AL = 100 - (TL + RL), as defined in the standard EN 410: 1998. The light absorption of the coating corresponds to the difference of the absorption of the coated substrate and the uncoated substrate.By the terms "on" and "under" when related to the relative position of one element (layer, structure or stack) to another, it is meant that said element is more distant from or closer to, respectively, the substrate than the other one. It is not meant that said elements are directly contacting each other, without excluding this possibility. In particular, additional elements may be present between said elements. On the contrary, the expression "direct contact" "directly on" or "directly under" when related to the relative position of one element to another means that no additional element is disposed between said elements.

The NIR absorbing nanoparticles comprise indium, tin, zinc, antimony, aluminum, tungsten or mixtures thereof. More particularly, the NIR absorbing nanoparticles may be based on partially or fully oxidized metals selected from indium, tin, zinc, antimony, aluminum, tungsten and alloys thereof. In the context of the present application, the expression "based on" when referring to the composition of an element (matrix, layer or nanoparticles) means that said element comprises more than 80%, more than 90%, or even more than 95% by weight of said material. Said element may be essentially made of said material.

In one embodiment, the NIR absorbing nanoparticles may be based on transparent conductive oxide (TCO). In particular, the NIR absorbing nanoparticles may be TCO nanoparticles. The TCO may be selected from indium tin oxide (ITO), indium zinc oxide (IZO), antimony tin oxide (ATO), tin zinc oxide (TZO), fluorine-doped tin oxide (FTO), aluminum-doped zinc oxide (AZO), gallium-doped zinc oxide (GZO), and optionally doped tungsten oxide.

In the context of the present application, ITO refers to mixed oxide of tin and indium wherein the tin content is generally from 1.5 to 16 wt%, such as from 4 to 10 wt%. IZO refers to mixed oxide of zinc and indium wherein the zinc content is generally from 10 to 60 wt%, such as from 15 to 40 wt%. ATO refers to mixed oxide of tin and antimony wherein the antimony content is generally from 2 to 15 wt%, such as from 2 to 8 wt%. TZO refers to mixed oxide of tin and zinc wherein the tin content is generally from 8 to 70 wt%, such as from 24 to 55 wt%. When referring to FTO, it is meant tin oxide comprising generally from 1 to 3 wt% of fluorine. AZO refers to zinc oxide comprising generally from 0.2 to 3 wt%, such as from 0.5 to 2 wt%, of aluminum oxide. GZO refers to zinc oxide comprising generally from 0.2 to 10 wt%, such as from 2 to 5 wt%, of gallium oxide. Optionally doped tungsten oxide refers to tungsten oxide which may comprise a dopant such as cesium. Cesium-doped tungsten oxide refers to CsₓW_{y}O_{z} wherein 0.001≤x/y≤1 and 2.2≤z/y≤3.0.

In another embodiment, the NIR absorbing nanoparticles may be partially oxidized metallic nanoparticles. By "partially oxidized" it is meant that not all of the metal atoms have been converted to their oxide form. The metallic nanoparticles may be based on indium, tin, zinc, antimony, aluminum, tungsten or alloys thereof. The partially oxidized nanoparticles may be in a uniform oxidized form, i.e. the degree of oxidation is substantially constant within the nanoparticles. Alternatively, the partially oxidized nanoparticles may have a core-shell structure with a metallic core and an at least partially oxidized shell or even a fully oxidized shell, such as a TCO shell.

In one embodiment, the NIR absorbing nanoparticles are spaced apart from each other. In particular, the NIR absorbing nanoparticles may form an array of discrete nanoparticles. The terms "spaced apart" or "discrete" are defined as meaning unconnected so that each nanoparticle does not touch a neighboring nanoparticle. In particular embodiments, the NIR absorbing nanoparticles may be organized in one single plan or discrete plans so as to form at least one NIR absorbing nanoparticle layer, optionally within an inorganic matrix.

The average diameter of the NIR absorbing nanoparticles may be from 100, 120 or 150 nm to 300, 280 or 250 nm. The diameter of the NIR absorbing nanoparticles may be measured with a transmission electron microscope.

In an embodiment, the NIR absorbing coating is made of an inorganic matrix containing NIR absorbing nanoparticles. In an embodiment, the inorganic matrix may be based on oxide, nitride or oxynitride materials, such as silicon oxide, silicon nitride, silicon oxynitride, silicon zirconium nitride, titanium oxide, aluminum oxide, zinc oxide, niobium oxide, bismuth oxide, lead oxide, aluminum-doped zinc oxide, gallium-doped zinc oxide, tin zinc oxide, magnesium zinc oxide, magnesium oxide or molybdenum oxide or combination thereof. In a particular embodiment, the inorganic matrix is based on silicon oxide, silicon nitride, silicon oxynitride, titanium oxide, zinc oxide or niobium oxide. In another particular embodiment, the inorganic matrix is based on an oxygen-porous material, such as tin zinc oxide, zinc oxide or titanium oxide. The NIR coating of the present invention may not comprise an organic binder.

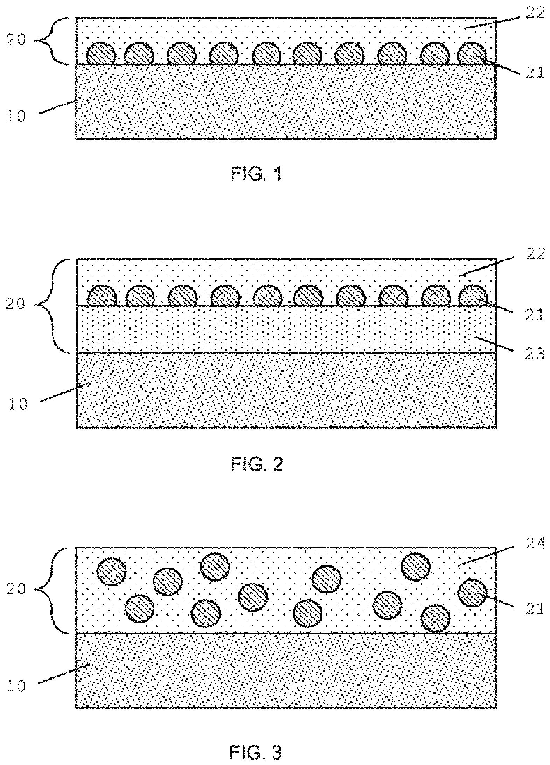

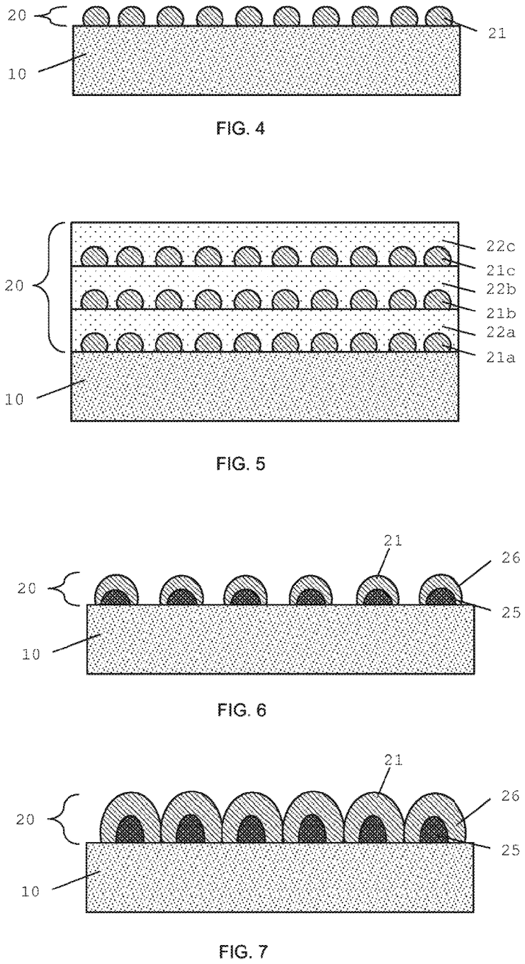

In the present application, by "an inorganic matrix containing NIR absorbing nanoparticles" it is meant that the nanoparticles are confined within the inorganic matrix or at least covered by the inorganic matrix. The inorganic matrix may be formed by one single layer or several layers made of the same or different materials. In particular, the NIR absorbing nanoparticles may be sandwiched between two layers forming the inorganic matrix. Accordingly, the NIR absorbing coating comprise at least one of the following NIR absorbing structures:
[1] a NIR absorbing nanoparticle layer and an inorganic overlayer directly on said NIR absorbing nanoparticle layer, as illustrated for example in Fig. 1;
[2] an inorganic underlayer, a NIR absorbing nanoparticle layer directly on said inorganic underlayer, and an overlayer directly on said NIR absorbing nanoparticle layer, as illustrated for example in Fig.2;
[3] NIR absorbing nanoparticles dispersed within an inorganic encapsulating layer, as illustrated for example in Fig.3; and
[4] a NIR absorbing nanoparticle layer, as illustrated for example in FIG. 4.

The overlayers, the underlayers and the encapsulating layer of structures [1], [2] and [3] may be based on oxide, nitride or oxynitride materials, as described above for the inorganic matrix.

The quantity of NIR absorbing nanoparticles in structures [1], [2], [3] and [4] may be expressed by their surface density. In order to be independent from the degree of oxidation of the material, the surface density of the NIR absorbing nanoparticles is expressed by the surface density of the metallic atoms involved in the NIR absorbing nanoparticles. The surface density of the NIR absorbing nanoparticles can be determined by microanalysis using an electron microprobe (EMP), optionally coupled with secondary ion mass spectrometry (SIMS). An "equivalent theoretical layer thickness" corresponding to the thickness of a theoretical continuous layer made of an equivalent surface density can then be deduced by dividing the measured surface density with the density of the material of the NIR absorbing nanoparticles. The use of the equivalent theoretical layer thickness in place of the surface density may be particularly adapted for characterizing structures [1], [2] and [4] wherein the NIR absorbing nanoparticles form a layer. The equivalent theoretical layer thickness can also be determined from the process parameters as will be explained thereafter. The equivalent theoretical layer thickness corresponding to the quantity of NIR absorbing nanoparticles may be from 5 to 70 nm, or even 10 to 30 nm.

Referring to Fig. 1 to 4, the functionalized substrate comprises a substrate **10** and a NIR absorbing coating **20** on said substrate **10**. On FIG. 1, the NIR absorbing coating **20** is made of one structure [1] comprising NIR absorbing nanoparticles **21** forming a layer and an overlayer **22** directly on the NIR absorbing nanoparticles layer. The NIR absorbing nanoparticles layer may have an equivalent theoretical layer thickness up to 70 nm, such or even up to 50 nm, for example from 10 to 30 nm. The overlayer may have a thickness of 1 to 200 nm, for example from 2 to 100 nm, even from 10 to 50 nm. Structure [1] may have a physical thickness from 1 to 200 nm, for example from 2 to 100 nm, even from 10 to 50 nm. FIG. 2 shows a NIR absorbing coating **20** made of one structure [2] comprising an under layer **23**, NIR absorbing nanoparticles **21** forming a layer directly on the under layer **23** and an overlayer **22** directly on the NIR absorbing nanoparticles layer. In structure [2], the underlayer **23** and the overlayer **22** may be based on the same or different materials. The NIR absorbing nanoparticle layer may have an equivalent theoretical layer thickness up to 70 nm, or even up to 50 nm, for example from 10 to 30 nm. The overlayer may have a thickness of 1 to 200 nm, for example from 2 to 100 nm, even from 10 to 50 nm. The underlayer may have a thickness of 1 to 200 nm, for example from 2 to 100 nm, even from 10 to 50 nm. Structure [2] may have a physical thickness from 2 to 500 nm, for example from 5 to 200 nm, even from 10 to 100 nm or from 15 to 50 nm. On FIG. 3, the NIR absorbing coating **20** is made of one structure [3] comprising NIR absorbing nanoparticles **21** dispersed within an encapsulating layer **24**. The encapsulating layer, as well as structure [3], may have a thickness from 2 to 200 nm, for example from 5 to 100 nm, even from 10 to 50 nm. FIG. 4 shows a NIR absorbing coating **20** made of one structure [4] comprising NIR absorbing nanoparticles **21** forming a NIR nanoparticle layer. The NIR absorbing nanoparticle layer may have an equivalent theoretical layer thickness up to 70 nm, or even up to 50 nm, for example from 10 to 30 nm. In certain embodiments, illustrated, for example in FIGS. 6 and 7, the oxidation of the metallic clusters may be performed until NIR absorbing nanoparticles **21** having a core shell structure with a metallic core **25** and a TCO shell **26** are obtained. These core shell structures may be particularly suitable for use in structure [4]. In an embodiment, the NIR absorbing nanoparticles **21** may be spaced apart from one another (FIG. 6). In another embodiment, the NIR absorbing nanoparticles **21** may contact one another (FIG. 7).

In certain embodiments, the NIR absorbing coating may comprise a plurality of structures, such as at least 2, at least 3, or at least 4 structures and up to 5, up to 7 and even up to 10 structures, each being independently selected from structures [1], [2], [3] and [4]. The plurality of structures may comprise all combinations of structures [1], [2], [3] and [4], such as combinations of at least one structure [1], at least one structure [2], at least one structure [3] and at least one structure [4], combinations of at least one structure [1] and at least one structure [2], combinations of at least one structure [1] and at least one structure [3], combinations of at least one structure [1] and at least one structure [4], combinations of at least one structure [2] and at least one structure [3], combinations of at least one structure [2] and at least one structure [4], combinations of at least one structure [3] and at least one structure [4], or combinations of only structures of the same type. In an embodiment, the plurality of structures may include only one structure [4], optionally in combination with at least one of structure [1], structure [2] and structure [3], where structure [4] is the uppermost of the NIR absorbing coating. In one particular embodiment, the NIR absorbing coating may comprise a plurality of structures [1]. Accordingly, the NIR absorbing coating may comprise a first NIR absorbing nanoparticles layer, a first inorganic overlayer directly on said first NIR absorbing nanoparticles layer, a second NIR absorbing nanoparticles layer directly on said first inorganic overlayer, and a second inorganic overlayer directly on said second NIR absorbing nanoparticle layer. The first and second NIR absorbing nanoparticle layers, respectively the first and second overlayers, may be based on the same or different materials. For example, FIG. 5 shows a functionalized substrate comprising a NIR absorbing coating **20** made of 3 structures [1] and thus comprising NIR absorbing nanoparticles **21a** forming a first NIR absorbing nanoparticles layer on the substrate **10**, a first overlayer **22a** directly on the first NIR absorbing nanoparticles layer, NIR absorbing nanoparticles **21b** forming a second NIR absorbing nanoparticles layer directly on the first overlayer **22a**, a second overlayer **22b** directly on the second NIR absorbing nanoparticles layer, NIR absorbing nanoparticles **21c** forming a third NIR absorbing nanoparticles layer directly on the second overlayer **22b** and a third overlayer **22c** directly on the third NIR absorbing nanoparticles layer. In another particular embodiment, the NIR absorbing coating may comprise a plurality of structures [2]. In still another particular embodiment, the NIR absorbing coating may comprise a plurality of structures [3]. When the NIR absorbing coating comprises several structures of the same type, said structures may be based on the same or different materials. In a simple embodiment, all the structures of the same type may be based on the same materials. In other embodiments, the structures of the same type may be based on different materials. For example, the inorganic material forming the underlayer, the overlayer or the encapsulating layer may be similar while the materials forming the NIR absorbing nanoparticles may be different from one other, or vice versa.

The physical thickness of the NIR absorbing coating depends of course on the number of structures [1], [2], [3] and [4] involved in this coating. For example, the NIR absorbing coating may have a physical thickness from 2, 5 or 10 nm to up to 0.5 or 1 µm or even several microns, such as 2 or 5 µm.

The substrate can be organic or inorganic. The substrate may include glass, glass-ceramic, or organic polymeric material. In an embodiment, the substrate may be transparent, i.e. having a visible light transmission (VLT) measured according to the standard ISO 9050:2003 of more than 80%, preferably more than 90%, more preferably more than 95%, or colored, for example blue, grey, green or bronze. The glass may be a boro-silicate or alumino-silicate glass. The organic polymeric material may be polycarbonate (PC), polymethylmethacrylate (PMMA), polyethylene terephtalate (PET), polyethylene naphtalate (PEN), polyurethane (PU), polyvinyl butyral (PVB), ethylene-vinyl acetate (EVA), fluorinated polymers such as ethylene tetrafluoroethylene (ETFE), or cellulose resin. Depending of its nature, the substrate may have a thickness from 5 µm to 20 mm. A glass or glass-ceramic substrate may have a thickness from 0.5 to 20 mm, such as from 4 to 6 mm. In an embodiment, the substrate may include, consist of, or consist essentially of a flexible polymer substrate made for example of PET, PEN, PU, PVB, EVA, ETFE or cellulose resin, and having a thickness from 5 to 200 µm, such as from 10 to 100 µm.

In certain embodiments, a process for producing a functionalized substrate can include:
- providing a substrate; and
- depositing NIR absorbing nanoparticles on said substrate,
wherein the step of depositing NIR absorbing nanoparticles comprises controlled oxidation of metallic clusters.

In further embodiments, the process for producing the functionalized substrate can include:
- depositing an inorganic matrix on said substrate.

More specifically, the present invention relates to a process for producing a functionalized substrate comprising:
- providing a substrate; and
- depositing at least one structure selected from structure [1], structure [2], structure [3], and structure [4] on said substrate;
wherein:
depositing structure [1] comprises:
   - depositing an NIR absorbing nanoparticles layer on said substrate; and
   - depositing an inorganic overlayer directly on said NIR absorbing nanoparticles layer;
depositing structure [2] comprises:
   - depositing an inorganic underlayer on said substrate;
   - depositing an NIR absorbing nanoparticles layer directly on said inorganic underlayer; and
   - depositing an inorganic overlayer directly on said NIR absorbing nanoparticles layer;
depositing structure [3] comprises:
   - depositing simultaneously NIR absorbing nanoparticles and an inorganic encapsulating layer on said substrate;
and depositing structure [4] comprises:
   - depositing an NIR absorbing nanoparticles layer on said substrate.

The substrate, the NIR absorbing nanoparticles, the inorganic matrix, the inorganic overlayer, the inorganic underlayer and the inorganic encapsulating layer may be as described above for the functionalized substrate.

In an embodiment, the NIR absorbing nanoparticles and the inorganic matrix are deposited by magnetron sputtering or reactive magnetron sputtering. Magnetron sputtering is a deposition method commonly used for depositing thin layers on a substrate. Magnetron sputtering refers to magnetic field assisted cathode sputtering. In reactive magnetron sputtering, the deposited material is formed by chemical reaction between the target material (i.e. the cathode) and a gas, generally oxygen, nitrogen or mixture thereof. When very thin layers of materials are deposited a de-wetting phenomenon of the solid thin layer can occur. This phenomenon is common for silver and gold thin layers. Very thin layers may thus not be continuous layers. In particular, sputtering low material quantity may result in the deposition of discrete clusters instead of continuous layer. In accordance with certain embodiments, the "percolation threshold" is defined as the limit of the sputtered material quantity under which discrete clusters can be obtained. The sputtered material quantity may be deduced from the process parameters. Although a continuous layer may not be obtained, an "equivalent theoretical layer thickness" corresponding to the thickness of a theoretical continuous layer obtained with a given sputtered material quantity can be defined. The equivalent theoretical layer thickness depends on the power applied to the target and on the speed of motion of the substrate. Of course, when the layer is a continuous layer, the equivalent theoretical layer thickness is equal to the real thickness of the layer. The equivalent theoretical layer thickness can thus be determined by considering the speed of motion of the substrate during the deposition of the NIR nanoparticles and the quantity of material sputtered per unit of time. For example, if for given sputtering conditions a continuous layer having a thickness of 10 nm is obtained, the equivalent theoretical layer thickness of a discontinuous layer or discrete clusters obtained when the speed of motion of the substrate is increased by a factor of 2, all other parameters being equal, would be 5 nm.

The percolation threshold depends on the material to be sputtered. The percolation threshold can be determined for a given material by tests. For example, the percolation threshold for an InSn alloy with a weight ratio ranging from 95:5 to 80:20 corresponds to an equivalent theoretical layer thickness of more than 150 nm. For a SnSb alloy with a weight ratio ranging from 95:5 to 60:40 the percolation threshold corresponds to an equivalent theoretical layer thickness of around 8 nm.

The NIR absorbing nanoparticles which are based on at least partially oxidized metals or alloys are obtained by depositing metallic clusters by magnetron sputtering using metallic targets and oxidizing the metallic clusters.In one embodiment, the metallic clusters may be deposited by co-sputtering using a combination of metallic and/or oxide targets, one metallic target providing the material for the metallic clusters and another target providing the material for the encapsulating layer, so that the metallic clusters and the encapsulating layer are deposited simultaneously. This embodiment is particularly adapted to the deposition of structure [3]. More particularly, a combination of a metallic target for depositing the metallic clusters and a target for depositing an oxygen-porous encapsulating layer, such as a tin zinc oxide layer, may be used. The materials for the metallic clusters and for the encapsulating layer may be immiscible so as to obtain a phase segregation of the NIR absorbing nanoparticles within the encapsulating layer.

The deposition of the NIR absorbing nanoparticles thus include:
- depositing metallic clusters; and
- oxidizing said metallic clusters so as to obtain NIR absorbing nanoparticles.

Here, the expression "metallic clusters" may also include partially oxidized metallic clusters.

The desired degree of oxidation for the NIR absorbing nanoparticles is obtained through a controlled oxidation of the metallic clusters. This controlled oxidation can be obtained either in situ in the deposition chamber or, in a post-annealing treatment.

In a first embodiment, the controlled oxidation of the metallic clusters is obtained in situ in the deposition chamber, by performing a heat treatment under controlled amount of oxygen after the deposition of the metallic clusters. This embodiment is particularly adapted to the deposition of structures [1], [2] or [4]. The amount of oxygen allowed to enter the deposition chamber, initially under vacuum, is controlled depending on the desired oxidation degree of the metallic clusters. The pressure in the deposition chamber due to the introduction of oxygen is typically from 5 to 50 µbar. The temperature of the heat treatment is from 250 to 700°C, preferably form 300 to 650°C. The temperature is adapted to the size of the metallic cluster, which have typically an average diameter from 100 to 300 nm. The bigger the particles, the higher the temperature. Temperatures below 350°C do not allow sufficient oxidation the metallic clusters, resulting in high residual light absorption of the coating and low NIR absorption. Temperatures above 700°C prevent controlled oxidation of the metallic clusters, resulting in low NIR absorption properties. The duration of the heat treatment is typically from 2 to 120 min, preferably from 10 to 60 min.

In a second embodiment, the controlled oxidation of the metallic clusters is obtained in a post-annealing treatment, by depositing an oxygen-porous inorganic layer, such as tin zinc oxide, on the metallic clusters and performing a post annealing treatment under oxygen-containing atmosphere. This embodiment is particularly adapted to the deposition of structures [1], [2] and [3]. In this embodiment, the amount of oxygen in the annealing atmosphere is not critical since the oxidation of the metallic clusters is limited by the presence of the oxygen-porous layer. The annealing atmosphere must nonetheless be an oxygen-containing atmosphere, typically air. The duration of the post-annealing treatment is typically from 1 to 600 min, preferably form 2 to 300 min, more preferably from 5 to 120 min. The temperature of the post annealing treatment is from 300 to 800°C, preferably form 350 to 700°C. The temperature is adapted to the size of the metallic cluster, which have typically an average diameter from 100 to 300 nm. The bigger the particles, the higher the temperature. Temperatures below 250°C do not allow sufficient oxidation the metallic clusters, resulting in high residual light absorption of the coating and low NIR absorption. Temperatures above 800°C prevent controlled oxidation of the metallic clusters, resulting low NIR absorption properties.

In particular alternatives of the above first and second embodiments, the heat treatment or the post annealing treatment can be performed with rapid heat treatment, in particular rapid heat treatment using at least one laser radiation. Rapid heat treatments have advantageously a very high heat transfer coefficient, typically higher than 400 W/(m².K), that allows the desired temperature to be reached extremely rapidly (in general in a time of 1 second or less) and consequently allows the duration of the treatment to be limited. The heat generated has thus not time to diffuse into the substrate.

Accordingly, the deposition of structure [1] may include:
- depositing a metallic cluster layer on the substrate;
- controlled oxidation of the metallic cluster layer in the deposition chamber resulting in NIR absorbing nanoparticles; and
- depositing an inorganic overlayer directly on said NIR absorbing nanoparticles.
Alternatively, the deposition of structure [1] may include:
- depositing a metallic cluster layer on the substrate;
- depositing an oxygen-porous inorganic overlayer directly on said metallic cluster layer; and
- controlled oxidation of the metallic cluster layer in a post-annealing step resulting in NIR absorbing nanoparticles.
Similarly, the deposition of structure [2] may include:
- depositing an inorganic underlayer on the substrate;
- depositing a metallic clusters layer directly on said underlayer;
- controlled oxidation of the metallic clusters layer in the deposition chamber resulting in NIR absorbing nanoparticles; and
- depositing an inorganic overlayer directly on said NIR absorbing nanoparticles;
or alternatively:
- depositing an inorganic underlayer on the substrate;
- depositing a metallic clusters layer directly on said underlayer;
- depositing an oxygen-porous inorganic overlayer directly on said metallic cluster layer; and
- controlled oxidation of the metallic cluster layer in a post-annealing step resulting in NIR absorbing nanoparticles.
The deposition of structure [3] may include:
- co-depositing metallic clusters and an oxygen-porous layer on the substrate; and
- controlled oxidation of the metallic cluster layer in a post-annealing step resulting in NIR absorbing nanoparticles.
The deposition of structure [4] may include:
- depositing a metallic cluster layer on the substrate; and
- controlled oxidation of the metallic cluster layer in the deposition chamber resulting in NIR absorbing nanoparticles.

In another aspect, the present invention relates to a glazing comprising the functionalized substrate described above. In this case, the substrate is a glass substrate. The glazing may be a single or multiple (in particular double or triple) glazing, i.e. it may comprise a plurality of glass sheets housed in a frame and separated by a gas-filled space. The glazing may also be laminated and/or tempered and/or toughened and/or curved.

The glazing may include (on the same side or the opposite side of the NIR absorbing coating, or even on one side of another glass sheet of a multiple glazing) another functional coating. Said other functional coating may have a thermal function, especially solar-control or low-E functions, for example coating comprising metallic or metal nitride functional layers such as silver layer(s), niobium layer(s) or niobium nitride layer(s).

### Example 1

A functionalized substrate having a NIR absorbing coating formed by a SiO₂ matrix containing ITO-based nanoparticles has been prepared. An InSn metallic cluster layer, corresponding to an equivalent theoretical layer thickness of 20 nm, has first been deposited by magnetron sputtering on a glass substrate. The substrate coated with the InSn metallic cluster layer has been submitted to a controlled oxidation in the deposition chamber comprising annealing at 400°C under nitrogen environment for 30 minutes followed by an annealing at 400°C in oxygen-reduced environment for 10 minutes, thus resulting in a ITO nanoparticle layer. After the controlled oxidation step, a 40 nm thick SiO₂ layer has been deposited by magnetron sputtering on the ITO nanoparticle layer.

Table 1 shows the operating conditions for the magnetron sputtering deposition this type of layer.

**Table 1**

| Layer | Target | Operating pressure | Gas |
|---|---|---|---|
| InSn clusters | InSn (90:10 wt%) | 8 µBar | Ar (150 sccm) |
| SiO₂ | Si:Al | 3 µbar | Ar (20sccm) / O₂ (10 sccm) |

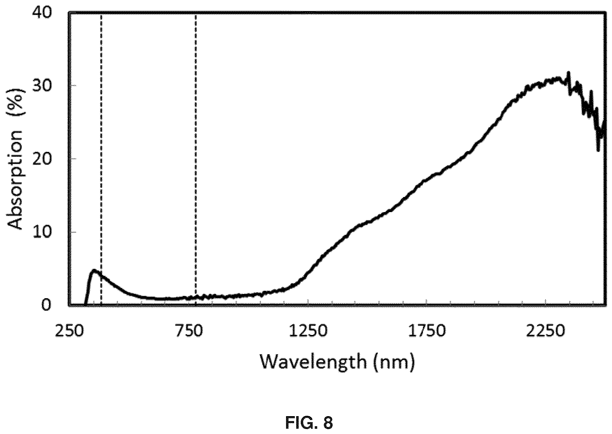

The energy absorption, also called solar direct absorbance, of the functionalized substrate thus obtained, measured according to ISO 9050:2003, reached 10%. The Absorption spectrum of the coated substrate is shown on Fig.8. The light transmittance (TL) and the energy transmittance (TE), measured according to EN 410:1998, are respectively 90% and 83%, corresponding to a ratio TL/TE of 1.1.

### Example 2

A functionalized substrate having a NIR absorbing coating formed by a SnZnOx matrix containing ITO-based nanoparticles has been prepared. An InSn metallic cluster layer, corresponding to an equivalent theoretical layer thickness of 20 nm, has first been deposited by magnetron sputtering on a glass substrate. A 10 nm thick SnZnO layer has then been deposited by magnetron sputtering on the InSn clusters. The coated substrate has been submitted to a post-annealing under ambient air at 400°C for 30 minutes.

Table 2 shows the operating conditions for the magnetron sputtering deposition for each type of layer.

**Table 2**

| Layer | Target | Operating pressure | Gas |
|---|---|---|---|
| InSn clusters | InSn (90:10 wt%) | 8 µBar | Ar (150 sccm) |
| SnZnOx | SnZn | 3.5 µbar | Ar (60 sccm) / O₂ (6 sccm) |

The energy absorption, also called solar direct absorbance, of the functionalized substrate thus obtained, measured according to ISO 9050:2003, reached 8%. The light transmittance (TL) and the energy transmittance (TE), measured according to EN 410:1998, are respectively 89% and 84%, corresponding to a ratio TL/TE of 1.06.

## Claims

1. A functionalized substrate comprising a substrate (10) and a near infrared absorbing coating (20) having a ratio between the light transmittance and energy transmittance of at least 1.05 on said substrate (10), wherein
said near infrared absorbing coating (20) comprises near infrared absorbing nanoparticles (21) comprising indium, tin, zinc, antimony, aluminum, tungsten or mixtures thereof; and
said near infrared absorbing coating (20) comprise at least one of the following near infrared absorbing structures:
[1] near infrared absorbing nanoparticles (21) forming a near infrared absorbing nanoparticle layer and an inorganic overlayer (22) directly on said near infrared absorbing nanoparticle layer;
[2] an inorganic underlayer (23), near infrared absorbing nanoparticles (21) forming a near infrared absorbing nanoparticle layer directly on said inorganic underlayer (23), and an overlayer (22) directly on said near infrared absorbing nanoparticle layer;
[3] near infrared absorbing nanoparticles (21) dispersed within an inorganic encapsulating layer (24); and
[4] near infrared absorbing nanoparticles (21) forming a near infrared absorbing nanoparticle layer.

2. The functionalized substrate according to claim 1, wherein the near infrared absorbing nanoparticles (21) comprise a transparent conductive oxide selected from the group consisting of indium tin oxide, indium zinc oxide, antimony tin oxide, tin zinc oxide, fluorine-doped tin oxide, aluminum-doped zinc oxide, gallium-doped zinc oxide, and optionally doped tungsten oxide.

3. The functionalized substrate according to claim 1, wherein the near infrared absorbing nanoparticles (21) have a core-shell structure with a metallic core (25) and an at least partially oxidized shell (26).

4. The functionalized substrate according to claim 2, wherein the transparent conductive oxide is indium tin oxide.

5. The functionalized substrate according to any one of claims 1 to 4, wherein the near infrared absorbing nanoparticles (21) have a diameter from 100 to 300 nm.

6. The functionalized substrate according to any one of claims 1 to 5, wherein the near infrared absorbing nanoparticles (21) are spaced apart from each other.

7. The functionalized substrate according to any one of claim 1 to 6, wherein the overlayers (22), the underlayer (23) and the encapsulating layer (24) of structures [1], [2] and [3] are based on oxide, nitride or oxynitride materials.

8. The functionalized substrate according to claim 7, wherein the overlayers (22), the underlayer (23) and the encapsulating layer (24) of structures [1], [2] and [3] are based on an oxygen-porous material.

9. The functionalized substrate according to claim 7, wherein the overlayers (22), the underlayer (23) and the encapsulating layer (24) of structures [1], [2] and [3] are based on tin zinc oxide.

10. The functionalized substrate according to any one of claim 1 to 9, wherein the near infrared absorbing nanoparticles (21) have an equivalent theoretical layer thickness from 5 nm to 70 nm.

11. The functionalized substrate according to any one of claim 1 to 10, wherein the near infrared coating (20) has a light absorption of less than 10%.

12. A process for manufacturing a functionalized substrate according to any one of claims 1 to 11 comprising:
- providing a substrate (10); and
- depositing near infrared absorbing nanoparticles (21) by magnetron sputtering on said substrate;
wherein the step of depositing near infrared absorbing nanoparticles (21) comprises controlled oxidation of metallic clusters.

13. The process according to claim 12, wherein depositing near infrared absorbing nanoparticles comprises (21):
- depositing a metallic cluster layer; and
- controlled oxidation of the metallic cluster layer in the deposition chamber resulting in near infrared absorbing nanoparticles (21).

14. The process according to claim 12, wherein depositing near infrared absorbing nanoparticles (21) comprises:
- depositing metallic clusters; and
- depositing an oxygen-porous inorganic overlayer (22) directly on or simultaneously with said metallic clusters; and
- controlled oxidation of the metallic clusters in a post annealing step resulting in near infrared absorbing nanoparticles.

15. A glazing comprising the functionalized substrate according to any one of claims 1 to 11, wherein the substrate (10) is a glass substrate.

## Patentansprüche

1. Funktionalisiertes Substrat, umfassend ein Substrat (10) und eine nahinfrarotabsorbierende Beschichtung (20), die ein Verhältnis zwischen der Lichtdurchlässigkeit und Energiedurchlässigkeit von mindestens 1,05 an dem Substrat (10) aufweist, wobei
die nahinfrarotabsorbierende Beschichtung (20) nahinfrarotabsorbierende Nanopartikel (21) umfasst, umfassend Indium, Zinn, Zink, Antimon, Aluminium, Wolfram oder Mischungen davon; und die nahinfrarotabsorbierende Beschichtung (20) mindestens eine der folgenden nahinfrarotabsorbierenden Strukturen umfasst:
[1] nahinfrarotabsorbierende Nanopartikel (21), die eine nahinfrarotabsorbierende Nanopartikelschicht und eine anorganische Oberschicht (22) direkt an der nahinfrarotabsorbierenden Nanopartikelschicht ausbilden;
[2] eine anorganische Unterschicht (23), nahinfrarotabsorbierende Nanopartikel (21), die eine nahinfrarotabsorbierende Nanopartikelschicht direkt an der anorganischen Unterschicht (23) ausbilden, und eine Oberschicht (22) direkt an der nahinfrarotabsorbierenden Nanopartikelschicht;
[3] nahinfrarotabsorbierende Nanopartikel (21), die innerhalb einer anorganischen Verkapselungsschicht (24) dispergiert sind; und
[4] nahinfrarotabsorbierende Nanopartikel (21), die eine nahinfrarotabsorbierende Nanopartikelschicht ausbilden.

2. Funktionalisiertes Substrat nach Anspruch 1, wobei die nahinfrarotabsorbierenden Nanopartikel (21) ein transparentes leitfähiges Oxid umfassen, das aus der Gruppe ausgewählt ist, bestehend aus Indiumzinnoxid, Indiumzinkoxid, Antimonzinnoxid, Zinnzinkoxid, fluordotiertem Zinnoxid, aluminiumdotiertem Zinkoxid, galliumdotiertem Zinkoxid und optional dotiertem Wolframoxid.

3. Funktionalisiertes Substrat nach Anspruch 1, wobei die nahinfrarotabsorbierenden Nanopartikel (21) eine Kern-Schale-Struktur mit einem metallischen Kern (25) und einer mindestens teilweise oxidierten Schale (26) aufweisen.

4. Funktionalisiertes Substrat nach Anspruch 2, wobei das transparente leitfähige Oxid Indiumzinnoxid ist.

5. Funktionalisiertes Substrat nach einem der Ansprüche 1 bis 4, wobei die nahinfrarotabsorbierenden Nanopartikel (21) einen Durchmesser von 100 bis 300 nm aufweisen.

6. Funktionalisiertes Substrat nach einem der Ansprüche 1 bis 5, wobei die nahinfrarotabsorbierenden Nanopartikel (21) voneinander beabstandet sind.

7. Funktionalisiertes Substrat nach einem der Ansprüche 1 bis 6, wobei die Oberschichten (22), die Unterschicht (23) und die Verkapselungsschicht (24) von Strukturen [1], [2] und [3] auf Oxid-, Nitrid- oder Oxinitridmaterialien basieren.

8. Funktionalisiertes Substrat nach Anspruch 7, wobei die Oberschichten (22), die Unterschicht (23) und die Verkapselungsschicht (24) von Strukturen [1], [2] und [3] auf einem sauerstoffporösen Material basieren.

9. Funktionalisiertes Substrat nach Anspruch 7, wobei die Oberschichten (22), die Unterschicht (23) und die Verkapselungsschicht (24) von Strukturen [1], [2] und [3] auf Zinnzinkoxid basieren.

10. Funktionalisiertes Substrat nach einem der Ansprüche 1 bis 9, wobei die nahinfrarotabsorbierenden Nanopartikel (21) eine äquivalente theoretische Schichtdicke von 5 nm bis 70 nm aufweisen.

11. Funktionalisiertes Substrat nach einem der Ansprüche 1 bis 10, wobei die Nahinfrarotbeschichtung (20) eine Lichtabsorption von weniger als 10 % aufweist.

12. Verfahren zum Herstellen eines funktionalisierten Substrats nach einem der Ansprüche 1 bis 11, umfassend:
- Bereitstellen eines Substrats (10); und
- Abscheiden von nahinfrarotabsorbierenden Nanopartikeln (21) durch Magnetronsputtern an dem Substrat;
wobei der Schritt des Abscheidens von nahinfrarotabsorbierenden Nanopartikeln (21) eine gelenkte Oxidation von metallischen Clustern umfasst.

13. Verfahren nach Anspruch 12, wobei das Abscheiden von nahinfrarotabsorbierenden Nanopartikeln umfasst (21):
- Abscheiden einer metallischen Clusterschicht; und
- gelenkte Oxidation der metallischen Clusterschicht in der Abscheidekammer, was zu nahinfrarotabsorbierenden Nanopartikeln (21) führt.

14. Verfahren nach Anspruch 12, wobei das Abscheiden von nahinfrarotabsorbierenden Nanopartikeln (21) umfasst:
- Abscheiden von metallischen Clustern; und
- Abscheiden einer sauerstoffporösen anorganischen Oberschicht (22) direkt an oder gleichzeitig mit den metallischen Clustern; und
- gelenkte Oxidation der metallischen Cluster in einem Schritt eines Nachglühens, was zu nahinfrarotabsorbierenden Nanopartikeln führt.

15. Verglasung, umfassend das funktionalisierte Substrat nach einem der Ansprüche 1 bis 11, wobei das Substrat (10) ein Glassubstrat ist.

## Revendications

1. Substrat fonctionnalisé comprenant un substrat (10) et un revêtement absorbant le proche infrarouge (20) ayant un rapport entre le facteur de transmittance de lumière et la transmittance d'énergie d'au moins 1,05 sur ledit substrat (10), dans lequel
ledit revêtement absorbant le proche infrarouge (20) comprend des nanoparticules absorbant le proche infrarouge (21) comprenant de l'indium, de l'étain, du zinc, de l'antimoine, de l'aluminium, du tungstène ou des mélanges de celles-ci ; et ledit revêtement absorbant le proche infrarouge (20) comprend au moins l'une des structures absorbant le proche infrarouge suivantes :
[1] des nanoparticules absorbant le proche infrarouge (21) formant une couche de nanoparticules absorbant le proche infrarouge et une surcouche inorganique (22) directement sur ladite couche de nanoparticules absorbant le proche infrarouge ;
[2] une sous-couche inorganique (23), des nanoparticules absorbant le proche infrarouge (21) formant une couche de nanoparticules absorbant le proche infrarouge directement sur ladite sous-couche inorganique (23), et une surcouche (22) directement sur ladite couche de nanoparticules absorbant le proche infrarouge ;
[3] des nanoparticules absorbant le proche infrarouge (21) dispersées dans une couche d'encapsulation inorganique (24) ; et
[4] des nanoparticules absorbant le proche infrarouge (21) formant une couche de nanoparticules absorbant le proche infrarouge.

2. Substrat fonctionnalisé selon la revendication 1, dans lequel les nanoparticules absorbant le proche infrarouge (21) comprennent un oxyde conducteur transparent choisi dans le groupe constitué d'oxyde d'étain et d'indium, oxyde de zinc et d'indium, oxyde d'antimoine et d'étain, oxyde de zinc et d'étain, oxyde d'étain dopé au fluor, oxyde de zinc dopé à l'aluminium, oxyde de zinc dopé au gallium, et oxyde de tungstène éventuellement dopé.

3. Substrat fonctionnalisé selon la revendication 1, dans lequel les nanoparticules absorbant le proche infrarouge (21) ont une structure noyauenveloppe avec un noyau métallique (25) et une enveloppe au moins partiellement oxydée (26).

4. Substrat fonctionnalisé selon la revendication 2, dans lequel l'oxyde conducteur transparent est l'oxyde d'étain et d'indium.

5. Substrat fonctionnalisé selon l'une quelconque des revendications 1 à 4, dans lequel les nanoparticules absorbant le proche infrarouge (21) ont un diamètre allant de 100 à 300 nm.

6. Substrat fonctionnalisé selon l'une quelconque des revendications 1 à 5, dans lequel les nanoparticules absorbant le proche infrarouge (21) sont espacées l'une de l'autre.

7. Substrat fonctionnalisé selon l'une quelconque des revendications 1 à 6, dans lequel les surcouches (22), la sous-couche (23) et la couche d'encapsulation (24) de structures [1], [2] et [3] sont à base de matériaux oxydes, nitrures ou oxynitrures.

8. Substrat fonctionnalisé selon la revendication 7, dans lequel les surcouches (22), la sous-couche (23) et la couche d'encapsulation (24) de structures [1], [2] et [3] sont à base d'un matériau poreux en oxygène.

9. Substrat fonctionnalisé selon la revendication 7, dans lequel les surcouches (22), la sous-couche (23) et la couche d'encapsulation (24) de structures [1], [2] et [3] sont à base d'oxyde de zinc et d'étain.

10. Substrat fonctionnalisé selon l'une quelconque des revendications 1 à 9, dans lequel les nanoparticules absorbant le proche infrarouge (21) ont une épaisseur théorique de couche équivalente de 5 à 70 nm.

11. Substrat fonctionnalisé selon l'une quelconque des revendications 1 à 10, dans lequel le revêtement de rayons proches infrarouges (20) a une absorption lumineuse inférieure à 10 %.

12. Procédé de fabrication d'un substrat fonctionnalisé selon l'une quelconque des revendications 1 à 11 comprenant :
- la fourniture d'un substrat (10) ; et
- le dépôt de nanoparticules absorbant le proche infrarouge (21) par pulvérisation à magnétron sur ledit substrat ;
dans lequel l'étape de dépôt de nanoparticules absorbant le proche infrarouge (21) comprend une oxydation contrôlée d'agrégats métalliques.

13. Procédé selon la revendication 12, dans lequel le dépôt de nanoparticules absorbant le proche infrarouge comprend (21) :
- le dépôt d'une couche d'agrégats métalliques ; et
- une oxydation contrôlée de la couche d'agrégats métalliques dans la chambre de dépôt résultant en des nanoparticules absorbant le proche infrarouge (21).

14. Procédé selon la revendication 12, dans lequel le dépôt de nanoparticules absorbant le proche infrarouge (21) comprend :
- le dépôt d'agrégats métalliques ; et
- le dépôt d'une surcouche inorganique poreuse d'oxygène (22) directement sur ou simultanément avec lesdits d'agrégats métalliques ; et
- une oxydation contrôlée des agrégats métalliques dans une étape de post-recuit conduisant à des nanoparticules absorbant le proche infrarouge.

15. Vitrage comprenant le substrat fonctionnalisé selon l'une quelconque des revendications 1 à 11, dans lequel le substrat (10) est un substrat en verre.
